# EUROPÄISCHE PATENTSCHRIFT

(11) **EP 0 712 283 B1**
(45) Veröffentlichungstag und Bekanntmachung des Hinweises auf die Patenterteilung: **23.04.1997**
(21) Anmeldenummer: 94924808.2
(22) Anmeldetag: 27.07.1994
(51) Int. Cl.: A23G 1/14

(54) **VORRICHTUNG ZUM CONCHIEREN VON SCHOKOLADEMASSE**
DEVICE FOR CONCHING CHOCOLATE COMPOUND
DISPOSITIF DE CONCHAGE DE PATE DE CHOCOLAT

(30) Priorität: 04.08.1993 DE 4326075
(43) Veröffentlichungstag der Anmeldung: 22.05.1996
(73) Patentinhaber: CALLEBAUT N.V., B-9280 Lebbeke-Wieze (BE)
(72) Erfinder: CALLEBAUT, Frans, B-9420 Bambrugge (BE); BRUYLAND, Rudy, B-9310 Herdersem (BE)
(74) Vertreter: Bolte, Erich, Dipl.-Ing.
(86) Internationale Anmeldenummer: EP9402478
(87) Internationale Veröffentlichungsnummer: WO9504470

(56) Entgegenhaltungen:
- CH-A- 405 910
- DE-A- 3 918 813

## Beschreibung

Die Erfindung betrifft eine Vorrichtung (Conche) zum Mischen (Conchieren) von Bestandteilen für die Herstellung von Schokolademasse, mit in einem im wesentlichen zylindrischen Behälter, insbesondere in einer Hauptkammer, um eine horizontale Achse drehbarer, mittiger Hauptwelle, auf der Mischwerkzeuge angeordnet sind und mit an einer inneren Mantelfläche des Gehäuses in Umfangsrichtung umlaufenden Abstreiforganen.

Eine derartige Vorrichtung zum Conchieren von Schokolademasse ist bekannt durch DE 39 18 813. Eine solche "klassische" Conche weist einen Conchenbehälter auf, der aus drei achsparallelen zylindrischen, oben offenen Kammern besteht. Es handelt sich dabei um eine im Durchmesser größere, mittlere Hauptkammer und zwei seitlichen Nebenkammern. Die drei Kammern gehen unter Bildung des Conchenbehälters ineinander über. In jeder Kammer sind Mischwerkzeuge auf drehend angetriebenen Wellen angeordnet.

Das Conchieren von Schokolademasse ist bisher ein zeitintensiver Prozeß. Zum vollständigen Conchieren einer Charge mit einer Conche entsprechend DE 39 18 813 sind beispielsweise 12 h erforderlich.

Es ist deshalb Aufgabe der Erfindung, eine Conche zum Conchieren von Schokolademasse so auszubilden und weiterzuentwickeln, daß die erforderliche Dauer des Conchierens beträchtlich reduziert wird, ohne Qualitätseinbußen beim fertigen Produkt (Schokolademasse) hinnehmen zu müssen.

Zur Lösung dieser Aufgabe ist die erfindungsgemäße Vorrichtung bzw. Conche dadurch gekennzeichnet, daß - zusätzlich zu den üblichen Mischwerkzeugen - weitere Mischorgane innerhalb des Conchenbehälters angeordnet sind, die mit eigenständigem Antrieb in einem Bereich außerhalb des Bewegungsbereichs der Mischwerkzeuge und der Abstreiforgane wirksam sind.

Bisher ist man davon ausgegangen, daß der klassische Aufbau einer Conche mit flügelartigen Mischwerkzeugen auf der Hauptwelle und auf Nebenwellen sowie mit an der Mantelfläche des Behälters entlanglaufenden Abstreiforganen zu einer optimalen Vermischung der Bestandteile führt. Es ist nun die Erkenntnis der Erfindung, daß zusätzliche, eigenständig arbeitende Mischwerkzeuge mindestens in der Hauptkammer des Conchenbehälters zu einer deutlichen Verbesserung, insbesondere Beschleunigung, des Mischeffekts führen.

Bei diesen zusätzlichen Mischorganen handelt es sich gemäß einem weiteren Vorschlag der Erfindung um mehrere Mischschnecken, die insbesondere paarweise mit wechselseitigem Eingriff innerhalb des Conchenbehälters angeordnet sind.

Ein optimales Ergebnis wird erzielt, wenn je zwei Schneckeneinheiten zu beiden Seiten einer (gedachten) vertikalen Mittelebene der Hauptkammer des Conchenbehälters im unteren Bereich desselben, nämlich mit geringem Abstand von einer unteren, zylindrischen Behälterwandung, angeordnet sind. Die Mischschnecken sind dabei einseitig, also mit lediglich einem Ende drehbar in einer Stirnwand des Conchenbehälters gelagert.

In besonderer Weise sind bei der erfindungsgemäßen Vorrichtung auch die Abstreiforgane gelagert, nämlich ausschließlich in einer mittigen Querebene auf der Hauptwelle. Die von beiden Stirnwänden achsparallel in das Innere des Conchenbehälters bzw. der Hauptkammer ragenden Mischschnecken enden mit (geringem) Abstand von radial gerichteten Abstützarmen der Abstreiforgane.

Auch im Bereich der Stirnwände sind erfindungsgemäß besondere Maßnahmen für die Positionierung von Abstreifern getroffen, die einerseits an den freien Enden der Abstreiforgane und andererseits auf der Hauptwelle an deren Enden gelagert sind.

Die Hauptwelle ist durch die ausschließlich mittige Abstützung der Abstreiforgane höheren Belastungen ausgesetzt. Diese werden durch eine zylindrische Querschnittsverstärkung ausgeglichen. Die Hauptwelle ist annähernd über die ganze Länge mit einem deutlich größeren Querschnitt ausgebildet als an den Enden. Daraus ergibt sich der überraschende Vorteil, daß ein sonst bei Conchen in diesem Bereich gebildeter Totraum ausgefüllt ist. Dies führt ebenfalls zu einer Verbesserung des Mischeffekts.

Eine weitere erfindungsgemäße Neuerung besteht darin, daß die auf der Hauptwelle angeordneten, flügelartigen Mischwerkzeuge um 90° gegenüber benachbarten Mischwerkzeugen in Umfangsrichtung versetzt sind.

Weitere Einzelheiten der Erfindung betreffen die Ausbildung und Anordnung der zusätzlichen Mischwerkzeuge und Abstreiforgane sowie die Ausbildung der Hauptwelle. Ein Ausführungsbeispiel der Erfindung wird nachfolgend anhand eines in den Zeichnungen dargestellten Ausführungsbeispiels näher erläutert. Es zeigt:

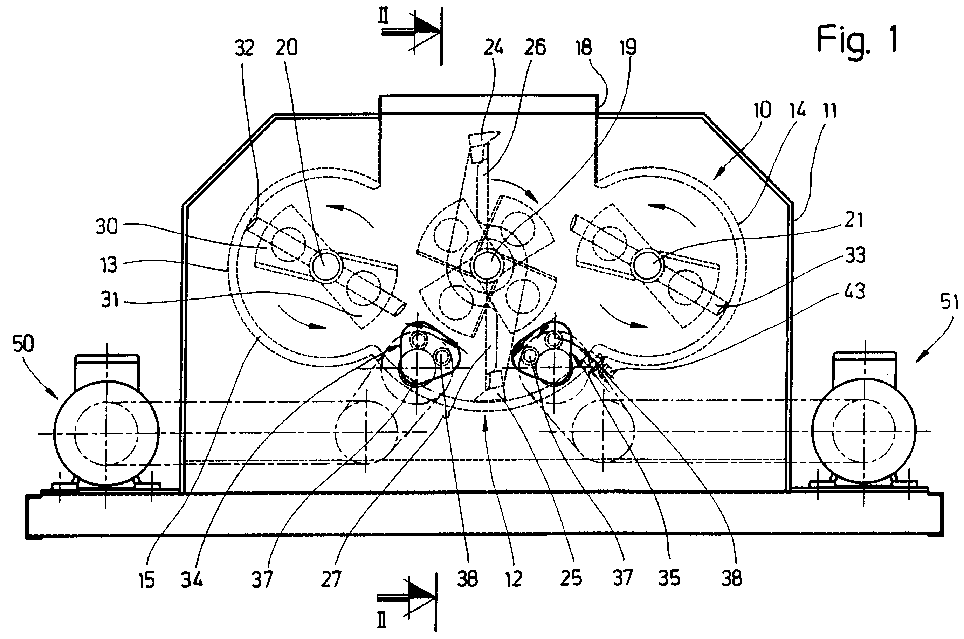

- Fig. 1: eine Conche in Stirnansicht,

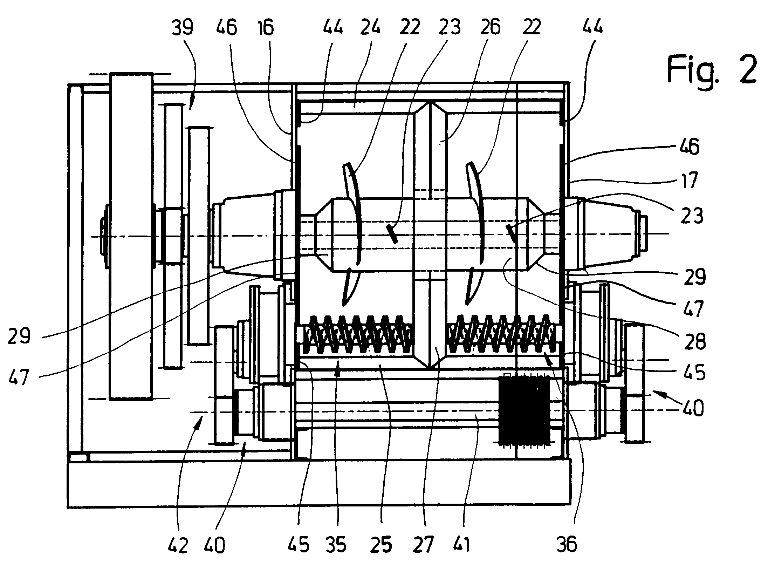

- Fig. 2: einen Vertikalschnitt in der Ebene II-II der Fig. 1 und
- Fig. 3: die Conche gemäß Fig. 1 und 2 im Grundriß, teilweise im Horizontalschnitt.

Bei dem vorliegenden Ausführungsbeispiel einer Conche ist ein Conchenbehälter 10 in einem Gehäuse 11 angeordnet. Der Conchenbehälter 10 besteht aus drei Kammern, nämlich einer mittigen Hauptkammer 12 und zwei achsparallelen Nebenkammern 13, 14. Hauptkammer 12 sowie Nebenkammern 13, 14 sind im Querschnitt teilzylindrisch ausgebildet. Eine Behälterwandung 15 besteht aus drei teilzylindrischen Bereichen.

An den Enden ist der Conchenbehälter 10 durch aufrechte Stirnwände 16, 17 verschlossen.

Das Ausgangsmaterial zum Herstellen von Schokolademasse wird von oben über eine Einfüllöffnung 18 in den Conchenbehälter 10 eingegeben. Die Einfüllöffnung 18 befindet sich im Bereich der Hauptkammer 12, üblicherweise seitlich versetzt benachbart zu einer der Stirnwände 16, 17.

Im Conchenbehälter 10 sind drehend angetriebene Mischvorrichtungen gelagert. In einer mittleren Längsachse der Hauptkammer 12 verläuft eine Hauptwelle 19. Achsparallel hierzu sind in den Nebenkammern 13, 14 jeweils Nebenwellen 20 und 21 angeordnet. Die Wellen 19..21 sind drehbar mit ihren Enden in den Stirnwänden 16, 17 gelagert. Auf der einen Seite des Conchenbehälters 10 ist außerhalb desselben, jedoch innerhalb des Gehäuses 11 ein umfängliches Hauptgetriebe 39 angeordnet, durch das die Hauptwelle 19 und die Nebenwellen 20, 21 rotierend angetrieben werden. Der Antrieb geht aus von zwei Hauptmotoren 48, 49. Bei dem vorliegenden Ausführungsbeispiel werden die Nebenwellen 20, 21 entgegengesetzt zur Hauptwelle 19 angetrieben.

Auf der Hauptwelle 19 sind Mischwerkzeuge angeordnet, nämlich mehrere in Längsrichtung verteilt und mit Abstand voneinander in Radialrichtung weisende Mischflügel 22, 23. In einer vertikalen Querebene befinden sich jeweils zwei einander gegenüberliegende, also um 180° gegeneinander versetzte Mischflügel 22 oder 23. In Längsrichtung der Hauptwelle 19 mit Abstand voneinander angeordnete bzw. benachbarte Mischflügel 22 einerseits und 23 andererseits sind - als Besonderheit dieser Conche - um 90° in Umfangsrichtung gegeneinander versetzt. Hierdurch ist ein verbesserter Mischeffekt gegeben und gleichzeitig wird dadurch die adsorbierte Motorleistung stabilisiert.

Auf der Hauptwelle 19 sind weiterhin Abstreiforgane 24, 25 abgestützt. Bei diesen handelt es sich um langgestreckte, im Querschnitt keilförmige Schaber, die in achsparalleler Position mit geringem Abstand an der Innenseite der Behälterwandung 15 entlangbewegt werden. Die beiden um 180° in Umfangsrichtung versetzten Abstreiforgane 24, 25 erstrecken sich über die volle Länge der Hauptkammer 12.

Die Abstreiforgane 24, 25 sind über jeweils einen radialgerichteten Abstützarm 26, 27 auf der Hauptwelle 19 abgestützt. Jedes Abstreiforgan 24, 25 ist durch einen derartigen Abstützarm 26, 27 mit der Hauptwelle verbunden, und zwar im Bereich einer etwa mittigen Querebene des Gehäuses 11. Die Abstreiforgane 24, 25 erstrecken sich demnach zu beiden Seiten der radial außenliegenden Enden der Abstützarme 26, 27. Sie sind mit einem keilförmigen Profil ausgebildet, um eine optimale und intensive Speisung der Schneckeneinheiten 34, 35 und 36 zu garantieren.

Um die erhöhte Belastung der Hauptwelle 19 durch die ausschließlich in der Mitte derselben abgestützten Abstreiforgane 24, 25 problemlos aufzunehmen, ist die Hauptwelle 19 annähernd über die ganze Länge mit einer Verdickung 28 zur Erhöhung des Widerstandsmoments versehen. Diese besteht im vorliegenden Fall aus einem Hohlzylinder, der passend auf die eigentliche Hauptwelle 19 aufgesetzt und mit dieser verbunden ist. An den Enden der zylindrischen Verdickung 28 befinden sich Konusstücke 29 als Übergang zum Endbereich der Hauptwelle 19. Die Verdickung 28 füllt einen beim Mischvorgang entstehenden Totraum innerhalb der Hauptkammer 12 aus. Die Mischflügel 22, 23 sind bei diesem Ausführungsbeispiel an der Verdickung 28 angebracht.

Die Nebenkammern 13, 14 sind im vorliegenden Falle hinsichtlich der Ausbildung und Anordnung von Mischwerkzeugen in herkömmlicher Weise ausgebildet, nämlich mit einander diametral gegenüberliegenden Mischflügeln 30, 31 auf den Nebenwellen 20, 21. Weiterhin sind auch in den Nebenkammern 13, 14 Abstreiforgane 32, 33 vorgesehen.

Eine wichtige Besonderheit besteht in der Anordnung zusätzlicher Mischorgane im Conchenbehälter 10. Diese sind im Bereich der Hauptkammer 12 angeordnet, und zwar im unteren Teil derselben, jedenfalls deutlich unterhalb der Hauptwelle 19. Die zusätzlichen Mischorgane befinden sich im Bereich zwischen den Mischflügeln 22, 23 und den Abstreiforganen 24, 25.

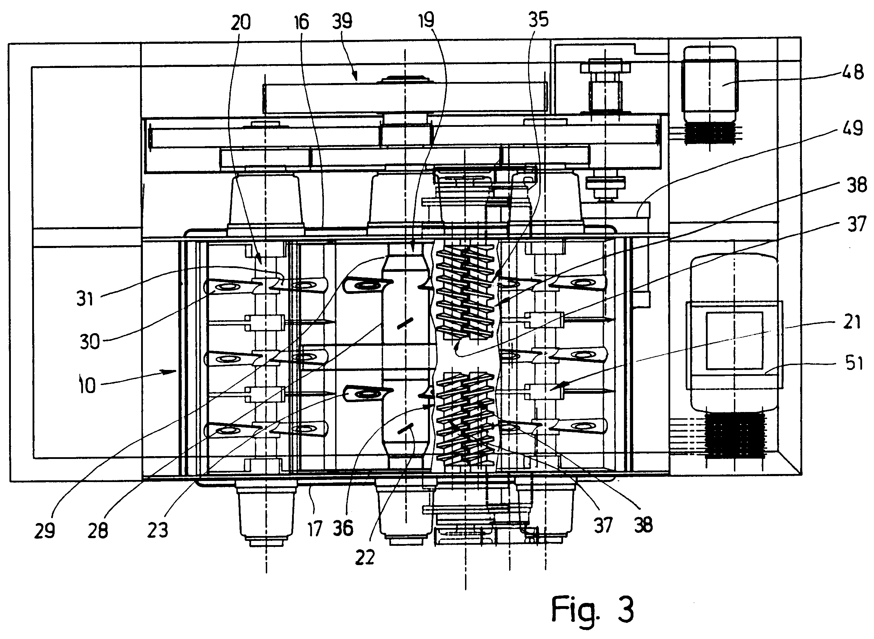

Bei dem gezeigten Ausführungsbeispiel sind als zusätzliche Mischorgane Mischschnecken vorgesehen, die mit Abstand vom unteren Teil der Behälterwandung 15 parallel zur Hauptwelle 19 installiert sind. Es handelt sich im vorliegenden Falle um insgesamt vier Schneckeneinheiten 34, 35 und 36 mit je zwei Mischschnecken 37, 38. In Fig. 3 sind allerdings aus Gründen der Übersichtlichkeit nur zwei gleichachsig gerichtete Schneckeneinheiten 35, 36 gezeigt. Die beiden jeweils eine Schneckeneinheit 34..36 bildenden Mischschnecken 37, 38 sind mit geringem Abstand voneinander angeordnet, derart, daß Schneckengänge der benachbarten Mischschnecken 37, 38 ineinander greifen bzw. miteinander kämmen. Die Mischschnecken 37, 38 jeder Schneckeneinheit 34..36 sind im Bereich der unteren, bogenförmigen Behälterwandung 15 mit gleichen Abständen von dieser angeordnet, also der Höhe nach versetzt zueinander. Die Mischschnecken 37, 38 liegen also auf einer (gedachten) Kreisbahn. Die Schneckengänge benachbarter Mischschnecken 37, 38 jeder Schneckeneinheit 34, 35 und 36 verlaufen unter einem bestimmten Steigungswinkel parallel zueinander. Die Schneckengänge gleichachsig angeordneter Schneckeneinheiten 34, 35 bzw. 36 verlaufen bzgl. einer Horizontalen spiegelbildlich vertauscht zueinander. Gedachte Verlängerungen der Schneckengänge gleichachsig angeordneter Schneckeneinheiten schließen demnach den doppelten Steigungswinkel ein.

Die Anordnung der Mischschnecken 37, 38 bzw. Schneckeneinheiten 34, 35, 36 im unteren Bereich des Conchenbehälters 10 hat eine erhebliche Verbesserung des Mischeffekts zur Folge. Das von oben eingefüllte Ausgangsmaterial wird auch bereits dann einem Durchmischungsprozeß unterzogen, wenn der Conchenbehälter 10 lediglich teilweise gefüllt ist. Darüber hinaus haben die Mischschnecken 37, 38 einen Feinmischeffekt, der zusammen mit dem Grobmischeffekt der Mischflügel 22, 23 sowie der Abstreiforgane 24, 25 zu einer überraschend intensiven Vermischung der Bestandteile führt.

Die Mischschnecken 37, 38 sind dabei so angeordnet und hinsichtlich der Arbeitsweise der Schneckengänge so ausgebildet, daß aufgrund entsprechender Drehrichtung während des Vermischens eine Bewegung des Mischgutes in Richtung zur mittleren Querebene des Conchenbehälters 10 stattfindet. Das Mischgut wird demnach im unteren Bereich des Conchenbehälters 10 stets in den Arbeitsbereich der auf der Hauptwelle 19 angeordneten Mischwerkzeuge gefördert. Die zwei Mischschnecken 37, 38 einer Schneckeneinheit 34, 35, 36 drehen stets in gleicher Drehrichtung. Die Mischschnecken 37, 38 gleichachsig angeordneter Schneckeneinheiten 34, 35 bzw. 36 drehen ebenfalls in gleicher Drehrichtung. Die Drehrichtung der Mischschnecken 37, 38 ist dabei entgegengesetzt zur Drehrichtung der Hauptwelle 19.

Die Mischschnecken 37, 38 der Schneckeneinheiten 34, 35, 36 sind lediglich an einem Ende gelagert und drehend angetrieben, nämlich an bzw. in den Stirnwänden 16, 17. Von beiden Stirnwänden 16, 17 aus erstrecken sich demnach je zwei solcher Schneckeneinheiten 34..36 mit jeweils zwei Mischschnecken 37, 38 als frei auskragende Mischorgane. Die Mischschnecken 37, 38 erstrecken sich jeweils bis unmittelbar zum Bewegungsbereich der Abstützarme 26, 27. Damit sind die Mischschnecken 37, 38 praktisch auf der gesamten Länge des Conchenbehälters 10, nämlich der Hauptkammer 12 wirksam, mit Ausnahme des mittleren Bereichs, in dem die Abstützarme 26, 27 umlaufen.

Die Mischschnecken 37, 38 jeder Schneckeneinheit 34..36 werden von außerhalb des Conchenbehälters 10 angetrieben. An jeder Seite der Conche ist außerhalb des Gehäuses 11 jeweils ein (elektrischer) Antriebsmotor 50, 51 für die Mischschnecken 37, 38 angeordnet. Jeder Antriebsmotor 50, 51 ist mit einer Antriebswelle 41 verbunden. Diese ist jeweils den beiden Schneckeneinheiten 34, 35 bzw. 36 zugeordnet, die sich auf derselben Seite in bezug auf eine vertikale Mittelebene der Hauptkammer 12 befinden. Die beiden gleichachsig angeordneten Schneckeneinheiten 34, 35 bzw. 36 werden demnach je durch eine Antriebswelle 41 angetrieben. Die Antriebswelle 41 befindet sich außerhalb des Conchenbehälters 10, jedoch innerhalb des Gehäuses 11. Aus diesem heraustretende Enden der Antriebswelle 41 sind jeweils mit einem Zahnradgetriebe 42 verbunden, welches auf die in den Stirnwänden 16, 17 gelagerten Enden der Mischschnecken 37, 38 einwirkt.

Die besondere mischtechnische Wirkung der Mischschnecken 37, 38 ermöglicht eine dosierte Zugabe von Kakaobutter und Lecithin, wobei ein geringerer Anteil dieser für die Schokolademischung erforderlichen Bestandteile ausreichend ist. Während Kakaobutter und Lecithin üblicherweise von oben her über die Einfüllöffnung 18 zugegeben werden, ist bei der vorliegenden Conche die Zugabe dieser Bestandteile im unteren Bereich des Conchenbehälters 10 vorgesehen, und zwar im unteren Teil der Hauptkammer 12. Deren Behälterwandung 15 ist mit einem oder mehreren Einfüllstutzen 43 für Kakaobutter und/oder Lecithin versehen. Die Einführung dieser Substanzen erfolgt über eine längere Phase des Mischvorgangs oder während des gesamten Mischvorgangs. Dadurch ist es möglich, eine geringere Menge an Kakaobutter zur Erzielung desselben Effekts zuzugeben, wobei ferner eine Zeitreduktion der Plastifizierungsphase erreicht wird. Zur verteilten Zuführung von Kakaobutter und/oder Lecithin sind zweckmäßigerweise mehrere Einfüllstutzen 43 in Längsrichtung der Hauptkammer 12 an der Behälterwandung 15 angebracht. Die Einfüllstutzen 43 sind mit geeigneten, steuerbaren Dosierorganen versehen.

Bei der vorliegenden Conche ist auch optimales Abstreifen des Mischgutes von den Wandungen des Conchenbehälters 10 vorgesehen. Die zylindrisch geformten Bereiche der Behälterwandung 15 werden durch die Abstreiforgane 24, 25 freigehalten. An deren Enden sind kurze quergerichtete bzw. radial nach innen weisende Abstreifstege 44 angeordnet. Es handelt sich dabei um Flachprofile, die einen außenliegenden kreisringförmigen Streifen der Stirnwand 16, 17 im Bereich der Hauptkammer 12 bearbeiten. Die Abstreifstege 44 laufen demnach mit den Abstreiforganen 24, 25 um.

In Ergänzung hierzu sind Abstreifflügel 46, 47 an beiden Stirnwänden vorgesehen, und zwar in einem radial innenliegenden Bereich. Diese sind auf der Hauptwelle 19 gelagert und drehen mit dieser als Abstreiforgan an den Stirnwänden 16, 17. Zwischen den Abstreifstegen 44, 45 und den Abstreifflügeln 46, 47 wird ein Zwischenraum gebildet, in dessen Bereich die Mischschnecken 37, 38 gelagert sind. Die Abstreifstege 44, 45 werden demnach auf der radial außenliegenden Seite und die Abstreifflügel 46, 47 an der radial innenliegenden Seite der Mischschnecken 37, 38 vorbeibewegt.

Die beschriebene Conche kann chargenweise betrieben werden oder auch in kontinuierlichem Betrieb, insbesondere nach Maßgabe der Conche gemäß DE 40 21 305.

## Patentansprüche

1. Vorrichtung zum Mischen, d.h. Conchieren von Bestandteilen für die Herstellung von Schokolademasse, mit in einem im wesentlichen zylindrischen Conchenbehälter (10), insbesondere in einer Hauptkammer (12) derselben, um eine horizontale Achse drehbarer, mittiger Hauptwelle (19), auf der Mischwerkzeuge (22, 23) angeordnet sind und mit an einer inneren Mantelfläche des Conchenbehälters (10) in Umfangsrichtung umlaufenden Abstreiforganen (24, 25), **gekennzeichnet** durch weitere Mischorgane innerhalb des Conchenbehälters (10), die mit eigenständigem Antrieb in einem Bereich außerhalb des Bewegungsbereichs der Mischwerkzeuge (22, 23) und der Abstreiforgane (24, 25) wirksam sind.

2. Vorrichtung nach Anspruch 1, dadurch gekennzeichnet, daß die zusätzlichen Mischorgane in einem Bereich unterhalb der Hauptwelle (19) angeordnet sind, insbesondere zwischen dem Drehbereich der Mischwerkzeuge (22, 23) auf der Hauptwelle (19) einerseits und den Abstreiforganen (24, 25) andererseits.

3. Vorrichtung nach Anspruch 1 oder 2, dadurch gekennzeichnet, daß die zusätzlichen Mischorgane drehend angetriebene Mischschnecken (37, 38) sind, die sich achsparallel zur Hauptwelle (19) vorzugsweise in der Hauptkammer (12) erstrecken.

4. Vorrichtung nach Anspruch 3, dadurch gekennzeichnet, daß Mischschnecken (37, 38), insbesondere Schneckeneinheiten (34, 35, 36) aus je zwei miteinander kämmenden Mischschnecken (37, 38), jeweils zu beiden Seiten einer gedachten vertikalen Längsmittelebene der Hauptkammer (12) angeordnet sind.

5. Vorrichtung nach Anspruch 4 oder 5, dadurch gekennzeichnet, daß jede Mischschnecke (37, 38) lediglich mit einem Ende drehbar gelagert ist, insbesondere in einer Stirnwand (16, 17) des Conchenbehälters (10) und auskragend von dieser sich in achsparalleler Richtung zur Hauptwelle (19) bis annähernd zur mittleren Querebene des Conchenbehälters (10) erstreckt.

6. Vorrichtung nach Anspruch 3 oder einem der weiteren Ansprüche, dadurch gekennzeichnet, daß die zusätzlichen Mischorgane, nämlich die Mischschnecken (37, 38) durch einen gesonderten Antrieb, nämlich durch einen Antriebsmotor (50, 51) antreibbar sind, wobei vorzugsweise den Schneckeneinheiten (34, 35; 36) jeweils auf einer Seite einer vertikalen Längsmittelebene der Hauptkammer (12) ein eigener Antriebsmotor (50, 51) zugeordnet ist, der auf eine Antriebswelle (41) für jeweils zwei gleichachsige Schneckeneinheiten (34, 35; 36) wirkt.

7. Vorrichtung nach Anspruch 1 oder einem der weiteren Ansprüche, dadurch gekennzeichnet, daß radial außenliegende Abstreiforgane (24, 25) wenigstens in der Hauptkammer (12) mit radialgerichteten Abstützarmen (26, 27) im Bereich einer mittleren Querebene der Hauptkammer (12) auf deren Hauptwelle (19) abgestützt sind, wobei die Abstützarme (26, 27) in einem zwischen zugekehrten Enden der Mischschnecken (37, 38) gebildeten Freiraum umlaufen.

8. Vorrichtung nach Anspruch 7, dadurch gekennzeichnet, daß sich die zu beiden Seiten der radial außenliegenden Enden der Abstützarme (26, 27) in Längsrichtung des Conchenbehälters (10) erstreckenden Abstreiforgane (24, 25) über die volle Länge der Hauptkammer (12) erstrecken.

9. Vorrichtung nach Anspruch 1, dadurch gekennzeichnet, daß an freien Enden der Abstreiforgane (24, 25) radial nach innen gerichtete Abstreifer angeordnet sind, nämlich Abstreifstege (44, 45), die an der Innenseite der Stirnwände (16, 17) in einem Bereich zwischen den Mischschnecken (37, 38) einerseits und der Behälterwandung (15) andererseits wirksam sind.

10. Vorrichtung nach Anspruch 1 oder einem der weiteren Ansprüche, dadurch gekennzeichnet, daß wenigstens in der Hauptkammer (12) auf den Enden der Hauptwelle (19) Abstreifwerkzeuge für die Innenseite der Stirnwände (16, 17) angeordnet sind, insbesondere Abstreifflügel (46, 47).

11. Vorrichtung nach Anspruch 10, dadurch gekennzeichnet, daß die Abstreifflügel (46, 47) eine geringere radiale Abmessung aufweisen als die Hauptkammer (12) bzw. die Stirnwand (16, 17) im Bereich derselben, derart, daß die Abstreifflügel (46, 47) bei der Drehbewegung an den Mischschnecken (37, 38) vorbeibewegbar sind.

12. Vorrichtung nach Anspruch 7 oder einem der weiteren Ansprüche, dadurch gekennzeichnet, daß die Hauptwelle (19) annähernd über die ganze Länge zur Aufnahme der Abstützarme (26, 27) mit einer Verdickung (28) des belastbaren Querschnitts ausgebildet ist, insbesondere mit einer auf die Hauptwelle (19) aufgesetzten zylindrischen Hülse, wobei die Abstützarme (26, 27) mit der Verdickung (28) verbunden sind.

13. Vorrichtung nach Anspruch 12, dadurch gekennzeichnet, daß Mischwerkzeuge, nämlich Mischflügel (22, 23) der Hauptwelle (19) auf der Verdickung (28) angeordnet sind.

14. Vorrichtung nach Anspruch 1 oder einem der weiteren Ansprüche, dadurch gekennzeichnet, daß Lecithin und/oder Kakaobutter dem Conchenbehälter (10) im unteren Bereich der Hauptkammer (12) zuführbar sind, insbesondere mit geringem Abstand von der vertikalen Längsmittelebene der Hauptkammer (12) über dort angebrachte Einfüllstutzen (43) oder dgl.

15. Vorrichtung nach Anspruch 1 oder einem der weiteren Ansprüche, dadurch gekennzeichnet, daß wenigstens die auf der Hauptwelle (19) angeordneten Mischwerkzeuge, nämlich Mischflügel (22, 23) in Umfangsrichtung um 90° versetzt zu den jeweils benachbarten Mischflügeln (22, 23) angeordnet sind.

## Claims

1. Apparatus for mixing, i.e. conching, ingredients for the production of chocolate mass, having, in an essentially cylindrical conch container (10), in particular in a main chamber (12) of the same, a central, main shaft (19) which can be rotated around a horizontal axis and on which mixing tools (22, 23) are arranged, and having stripping means (24, 25) which rotate in the circumferential direction on an inner lateral surface of the conch container (10), characterized by further mixing means within the conch container (10), which, by way of an independent drive, act in a region outside the area of movement of the mixing tools (22, 23) and of the stripping means (24, 25).

2. Apparatus according to Claim 1, characterized in that the additional mixing means are arranged in the region beneath the main shaft (19), in particular between the area of rotation of the mixing tools (22, 23) on the main shaft (19), on the one hand, and the stripping means (24, 25), on the other hand.

3. Apparatus according to Claim 1 or 2, characterized in that the additional mixing means are rotationally driven mixing screws (37, 38) which extend in a axis-parallel manner to the main shaft (19), preferably in the main chamber (12).

4. Apparatus according to Claim 3, characterized in that mixing screws (37, 38), in particular screw units (34, 35, 36) each comprising two mixing screws (37, 38) which mesh with one another, are arranged in each case on both sides of an imaginary vertical longitudinal centre plane of the main chamber (12).

5. Apparatus according to Claim 4 or 5, characterized in that each mixing screw (37, 38) is mounted rotatably, in particular in an end wall (16, 17) of the conch container (10), by one end only and, projecting from said end wall, extends, in an axis-parallel direction to the main shaft (19), virtually as far as the central transverse plane of the conch container (10).

6. Apparatus according to Claim 3 or one of the further claims, characterized in that the additional mixing means, namely the mixing screws (37, 38), can be driven by a separate drive, namely by a drive motor (50, 51), the screw units (34, 35; 36) preferably being assigned, on either side of a vertical longitudinal centre plane of the main chamber (12), an independent drive motor (50, 51), which acts on a drive shaft (41) for in each case two equiaxial screw units (34, 35; 36).

7. Apparatus according to Claim 1 or one of the further claims, characterized in that, at least in the main chamber (12), radially outer stripping means (24, 25) are supported, by way of radially directed supporting arms (26, 27), in the region of a central transverse plane of the main chamber (12), on the main shaft (19) thereof, the supporting arms (26, 27) rotating in a clearance formed between facing ends of the mixing screws (37, 38).

8. Apparatus according to Claim 7, characterized in that the stripping means (24, 25), which extend, in the longitudinal direction of the conch container (10), on both sides of the radially outer ends of the supporting arms (26, 27), extend over the entire length of the main chamber (12).

9. Apparatus according to Claim 1, characterized in that radially inwardly directed strippers, namely stripping webs (44, 45), are arranged at free ends of the stripping means (24, 25) and act, on the inner side of the end walls (16, 17), in a region between the mixing screws (37, 38), on the one hand, and the container wall (15), on the other hand.

10. Apparatus according to Claim 1 or one of the further claims, characterized in that stripping tools for the inner side of the end walls (16, 17), in particular stripping vanes (46, 47), are arranged at least in the main chamber (12), on the ends of the main shaft (19).

11. Apparatus according to Claim 10, characterized in that the stripping vanes (46, 47) are of a smaller radial dimension than the main chamber (12), or the end wall (16, 17) in the region thereof, such that, as they rotate, these stripping vanes (46, 47) can be moved past the mixing screws (37, 38).

12. Apparatus according to Claim 7 or one of the further claims, characterized in that, virtually over the entire length, the main shaft (19) is designed, for the purpose of receiving the supporting arms (26, 27), with a thickening (28) of the loadable cross-section, in particular with a cylindrical sleeve positioned on the main shaft (19), the supporting arms (26, 27) being connected to the thickening (28).

13. Apparatus according to Claim 12, characterized in that mixing tools, namely mixing vanes (22, 23), of the main shaft (19) are arranged on the thickening (28).

14. Apparatus according to Claim 1 or one of the further claims, characterized in that lecithin and/or cocoa butter can be fed to the conch container (10) in the bottom region of the main chamber (12), in particular at a small distance from the vertical longitudinal centre plane of the main chamber (12), via filler nozzles (43) or the like provided there.

15. Apparatus according to Claim 1 or one of the further claims, characterized in that at least the mixing tools, namely mixing vanes (22, 23), arranged on the main shaft (19), are arranged so as to be offset by 90° in the circumferential direction in relation to the respectively adjacent mixing vanes (22, 23).

## Revendications

1. Dispositif de mélange, pour concher du chocolat, en traitant des constituants destinés à la fabrication d'une masse de chocolat, avec un arbre principal (19) placé centralement, dans un récipient de conche (10) sensiblement cylindrique, en particulier dans une chambre principale (12) de celui-ci, en étant susceptible de tourner autour d'un axe horizontal, arbre sur lequel sont disposés des outils de mélange (22, 23) et avec des organes racleurs (24, 25) tournant en direction périphérique sur une surface d'enveloppe intérieure du récipient de conche (10), caractérisé par le fait de prévoir, à l'intérieur du récipient de conche (10), des organes de mélange supplémentaires, agissant à l'aide d'un entraînement propre dans une zone extérieure à la zone de déplacement des outils de mélange (22, 23) et des organes de raclage (24, 25).

2. Dispositif selon la revendication 1, caractérisé par le fait que les organes de mélange supplémentaires sont disposés dans une zone se trouvant au-dessous de l'arbre principal (19), en particulier entre la zone de rotation des outils de mélange (22, 23) sur l'arbre principal (19) d'une part, et les organes racleurs (24, 25) d'autre part.

3. Dispositif selon la revendication 1 ou 2, caractérisé par le fait que les organes de mélange supplémentaires sont des vis de mélange (37, 38) entraînées en rotation et s'étendant parallèlement à l'axe de l'arbre principal (19), de préférence dans la chambre principale (12).

4. Dispositif selon la revendication 3, caractérisé par le fait que les vis de mélange (37, 38), en particulier des unités à vis (34, 35, 36) constituées chacune de deux vis de mélange (37, 38) s'engrenant l'une dans l'autre, sont respectivement disposées des deux côtés d'un plan médian, longitudinal, vertical, imaginaire de la chambre principale (12).

5. Dispositif selon la revendication 4 ou 5, caractérisé par le fait que chaque vis de mélange (37, 38) est montée à rotation seulement à une extrémité, en particulier dans une paroi frontale (16, 17) du récipient de conche (10), et s'étend, en porte-à-faux depuis celle-ci, en direction parallèle à l'axe, vis-à-vis de l'arbre principal (19), jusqu'à atteindre pratiquement le plan transversal médian du récipient de conche (10).

6. Dispositif selon la revendication 3 ou l'une des revendications en dépendant, caractérisé par le fait que les organes de mélange supplémentaires, précisément les vis de mélange (37, 38) sont susceptibles d'être entraînés au moyen d'un entraînement spécial, précisément un moteur d'entraînement (50, 51), de préférence un moteur d'entraînement (50, 51) propre étant associé aux unités à vis (34, 35; 36), respectivement sur un côté d'un plan médian, longitudinal, vertical de la chambre principale (12), moteur d'entraînement agissant sur un arbre d'entraînement (41) destiné à une paire d'unités à vis (34, 35; 36) coaxiales.

7. Dispositif selon la revendication 1 ou l'une des autres revendications, caractérisé par le fait que des organes de raclage (24, 25) situés radialement, extérieurement, sont soutenus au moins dans la chambre principale, à l'aide de bras d'appui (26, 27) orientés radialement, le soutien se faisant dans la zone d'un plan transversal médian de la chambre principale (12), sur son arbre principal (19), les bras d'appui (26, 27) tournant dans un espace libre constitué entre les extrémités, tournées l'une vers l'autre, des vis de mélange (37, 38).

8. Dispositif selon la revendication 7, caractérisé par le fait que les organes de raclage (24, 25) qui s'étendent des deux côtés des extrémités radialement extérieures des bras d'appui (26, 27), dans la direction longitudinale du récipient de conche (10), s'étendent sur toute la longueur de la chambre principale (12).

9. Dispositif selon la revendication 1, caractérisé par le fait que, sur les extrémités libres des organes de raclage (24, 25), sont disposés des racleurs orientés radialement vers l'intérieur, précisément des nervures de raclage (44, 45), agissant, d'une part, sur la face intérieure des parois frontales (16, 17) dans une zone se trouvant entre les vis de mélange (37, 38) et, d'autre part, sur la face intérieure de la paroi du récipient (15).

10. Dispositif selon la revendication 1 ou l'une des autres revendications, caractérisé par le fait qu'au moins dans la chambre principale (12) sont disposés, sur les extrémités de l'arbre principal (19), des outils de raclage destinés à la face intérieure des parois frontales (16, 17), en particulier des ailettes de raclage (46, 47).

11. Dispositif selon la revendication 10, caractérisé par le fait que les ailettes de raclage (46, 47) ont une dimension radiale inférieure à celle de la chambre principale (12), respectivement de la paroi frontale (16, 17) dans la zone de celle-ci, de manière que les ailettes de raclage (46, 47) passent sur les vis de mélange (37, 38) lors du mouvement de rotation.

12. Dispositif selon la revendication 7 ou l'une des revendications en dépendant, caractérisé par le fait que l'arbre principal (19) est réalisé à peu près sur toute la longueur pour recevoir les bras d'appui (26, 27) avec un épaississement (28) de la section transversale susceptible d'être chargé, en particulier avec une douille cylindrique appliquée sur l'arbre principal (19), les bras d'appui (26, 27) étant reliés à l'épaississement (28).

13. Dispositif selon la revendication 12, caractérisé parle fait que des outils de mélange, précisément des ailettes de mélange (22, 23) de l'arbre principal (19), sont disposées sur l'épaississement (28).

14. Dispositif selon la revendication 1 ou l'une des autres revendications, caractérisé par le fait que de la lécithine et/ou du beurre de cacao sont susceptibles d'être amenés au récipient de conche (10) dans la zone inférieure de la chambre principale (12), en particulier à faible distance vis-à-vis du plan médian, longitudinal, vertical de la chambre principale (12), par l'intermédiaire d'une tubulure de remplissage (43) ou analogue, montée à cet endroit.

15. Dispositif selon la revendication 1 ou l'une des autres revendications, caractérisé par le fait qu'au moins les outils de mélange disposés sur l'arbre principal (19), précisément les ailettes de mélange (22, 23), sont décalés de 90° dans la direction périphérique vis-à-vis des ailettes de mélange (22, 23), respectivement voisines.
